# EUROPEAN PATENT APPLICATION

(11) **EP 2 979 969 A1**
(43) Date of publication of application: **03.02.2016**
(21) Application number: 15166491.9
(22) Date of filing: 06.05.2015
(51) Int. Cl.: B62M 6/55, B62M 11/02

(54) **POWER TRANSMISSION SYSTEM OF ELECTRIC BICYCLE**

(30) Priority: 31.07.2014 KR 20140098421
(71) Applicant: Samsung Electro-Mechanics Co., Ltd., Suwon-si, Gyeonggi-do 443-743 (KR)
(72) Inventor: Oh, Myung Geun, 443-743 Gyeonggi-Do (KR); Yun, Tae Ho, 443-743 Gyeonggi-Do (KR)
(74) Representative: Grünecker Patent- und Rechtsanwälte PartG mbB

(57) **Abstract**

There is provided a power transmission system of an electric bicycle (10), including: a first following gear (120) receiving power from a rotational shaft (12a) of a driving motor (12); a first driving gear (130) engaged with the first following gear (120) to receive power; a second following gear (140) installed in a first gear shaft (131) in which the first driving gear (130) is installed; a second driving gear (160) engaged with the second following gear (140) to receive power; a third following gear (170) installed in a second gear shaft (161) in which the second driving gear (160) is installed; and a third driving gear (180) engaged with the third following gear (170) to receive power, and installed in a pedal shaft (13).

## Description

### CROSS-REFERENCE TO RELATED APPLICATION

This application claims the benefit of Korean Patent Application No. 10-2014-0098421, filed on July 31, 2014, entitled "Power Transmission System Of Electric Bicycle" which is hereby incorporated by reference in its entirety into this application.

### BACKGROUND

The present disclosure relates to a power transmission system of an electric bicycle (or an e-bike).

A bicycle is configured such that a front wheel as a steering wheel and a rear wheel as a driving wheel are disposed linearly in front and rear sides of a frame, and moves forwards when a user works a pedal interworking with the rear wheel to rotate the rear wheel. A power transmission system, such as a chain or a gear, transmitting power generated in the peal to the rear wheel is installed in such a bicycle.

In particular, a chain type power transmission system includes a driving sprocket installed on one side of a pedal, a passive sprocket having a diameter smaller than that of the driving sprocket and installed in the rear wheel as a driving wheel, and a chain connecting the driving sprocket and the passive sprocket.

Thus, with such a configuration, when a user works a pedal, the driving sprocket integrally installed with the pedal rotates and the rear wheel connected to the passive sprocket by the chain also simultaneously rotates, moving the bicycle forwards.

Such a bicycle runs using a petal effort based on user pedaling, and there is no difficulty in running on a flatland, but a great amount of force is required when the user goes up a slope, such as a hill, on the bicycle.

In order to solve the problem, an electric bicycle including a motor to run using driving force of the motor in addition to the user's pedal effort has been developed.

Namely, a motor driven by a battery is used in an electric bicycle, and the electric bicycle is configured such that the user may select to run only with force for working a pedal, to run with force of a motor driven by a battery, or to run using the both.

### [Related Art Document]

### [Patent Document]

(Patent Document 1) Korean Patent Laid-Open Publication No. 2012-0132593

### SUMMARY

An aspect of the present disclosure may provide a power transmission system of an electric bicycle which is small in size and light in weight.

According to an aspect of the present disclosure, a power transmission system of an electric bicycle may include: a first following gear receiving power from a rotational shaft of a driving motor; a first driving gear engaged with the first following gear to receive power; a second following gear installed in a first gear shaft in which the first driving gear is installed; a second driving gear engaged with the second following gear to receive power; a third following gear installed in a second gear shaft in which the second driving gear is installed; and a third driving gear engaged with the third following gear to receive power, and installed in a pedal shaft.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a diagram illustrating an electric bicycle in which a power transmission system of an electric bicycle according to an exemplary embodiment of the present disclosure is used;
FIG. 2 is a perspective view illustrating a case in which the power transmission system of an electric bicycle according to an exemplary embodiment of the present disclosure is accommodated;
FIG. 3 is a front perspective view illustrating the power transmission system of an electric bicycle according to an exemplary embodiment of the present disclosure;
FIG. 4 is a rear perspective view illustrating the power transmission system of an electric bicycle according to an exemplary embodiment of the present disclosure;
FIG. 5 is a cutaway perspective view illustrating a structure in which a uni-directional clutch is installed in the power transmission system of an electric bicycle according to an exemplary embodiment of the present disclosure;
FIG. 6 is a perspective view illustrating the unidirectional clutch in the power transmission system of an electric bicycle according to an exemplary embodiment of the present disclosure;
FIG. 7 is a perspective view illustrating a structure in which a ratchet is installed in the power transmission system of an electric bicycle according to an exemplary embodiment of the present disclosure;
FIG. 8 is a perspective view illustrating the ratchet in power transmission system of an electric bicycle according to an exemplary embodiment of the present disclosure; and
FIG. 9 is a cross-sectional view illustrating the ratchet in power transmission system of an electric bicycle according to an exemplary embodiment of the present disclosure.

### DETAILED DESCRIPTION

The objects, features and advantages of the present disclosure will be more clearly understood from the following detailed description of the exemplary embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present disclosure, when it is determined that the detailed description of the related art would obscure the gist of the present disclosure, the description thereof will be omitted.

Hereinafter, exemplary embodiments of the present disclosure will be described in detail with reference to the accompanying drawings.

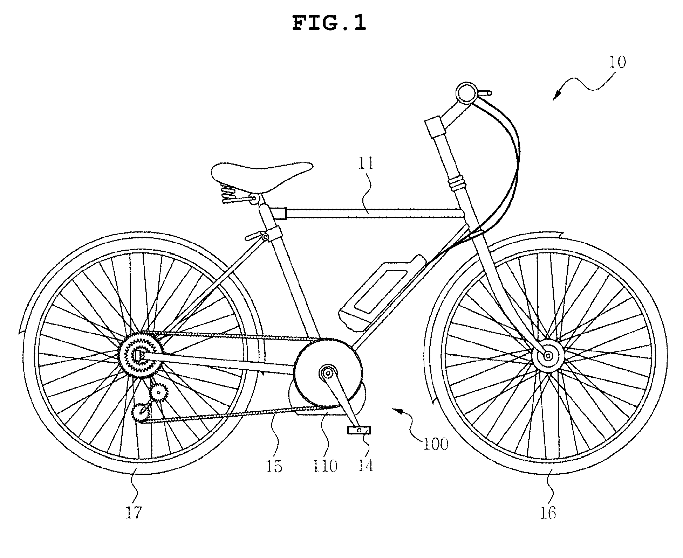

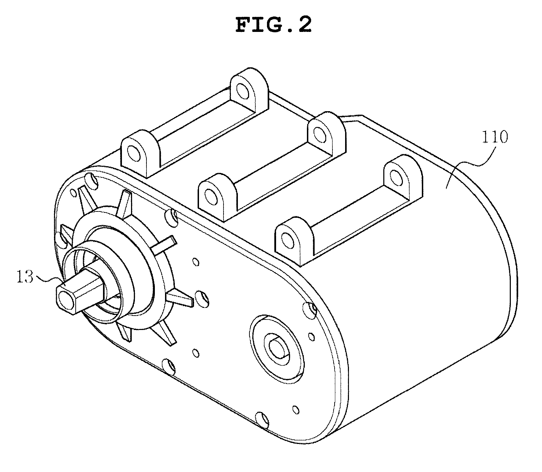

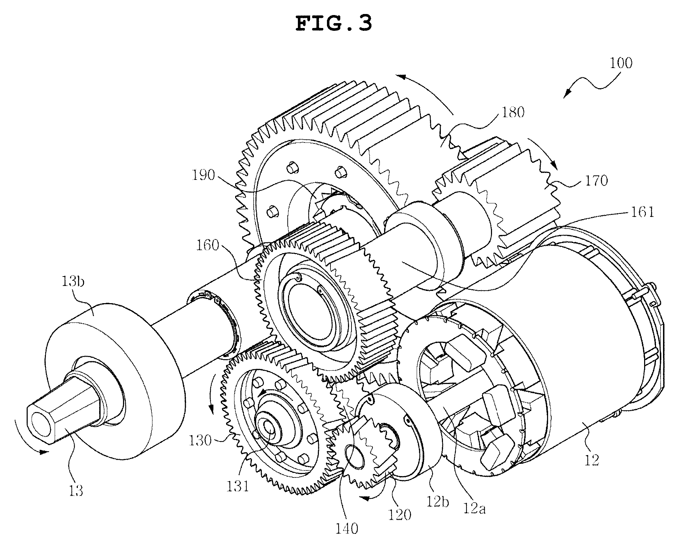

FIG. 1 is a diagram illustrating an electric bicycle in which a power transmission system of an electric bicycle according to an exemplary embodiment of the present disclosure is used, FIG. 2 is a perspective view illustrating a case in which the power transmission system of an electric bicycle according to an exemplary embodiment of the present disclosure is accommodated, and FIG. 3 is a front perspective view illustrating the power transmission system of an electric bicycle according to an exemplary embodiment of the present disclosure.

Referring to FIG. 3, a power transmission system 100 of an electric bicycle according to an exemplary embodiment of the present disclosure may include a first following gear 120, a first driving gear 130, a second following gear 150, a second driving gear 160, a third following gear 170, and a third driving gear 180. Also, a power transmission system 100 of an electric bicycle according to an exemplary embodiment of the present disclosure may further include a first power transmission unit and a second power transmission unit.

Referring to FIG. 1, in an electric bicycle 10, a front wheel 16 and a rear wheel 17 are supported by a frame 11, and a chain 15 rotating according to a pedal effort of the pedal 14 or power transmission from a driving motor 12 is engaged with the rear wheel 17. Here, the power transmission system 100 may include the pedal 14 and the driving motor 12. Here, when a force is applied to the pedal 14 by the user, the pedal 14 rotates and transmits rotary power to the chain 15. Also, the driving motor 12 is connected to a power supply unit, and when power is supplied, a rotational shaft 12a of the driving motor 12 rotates to transmit rotary power to the chain 15. Here, when the user exerts a force to the pedal 14 to run the electric bicycle 10, the driving motor 12 assists to enable the electric bicycle 10 to easily run on a hill, or the like, even though the user exerts a small amount of force to the petal 14.

Referring to FIG. 2, the power transmission system 100 of the electric bicycle according to an exemplary embodiment of the present disclosure may further include a case 110 having an accommodation space therein to accommodate a portion or the entirety of components of the power transmission system 100 to protect the same.

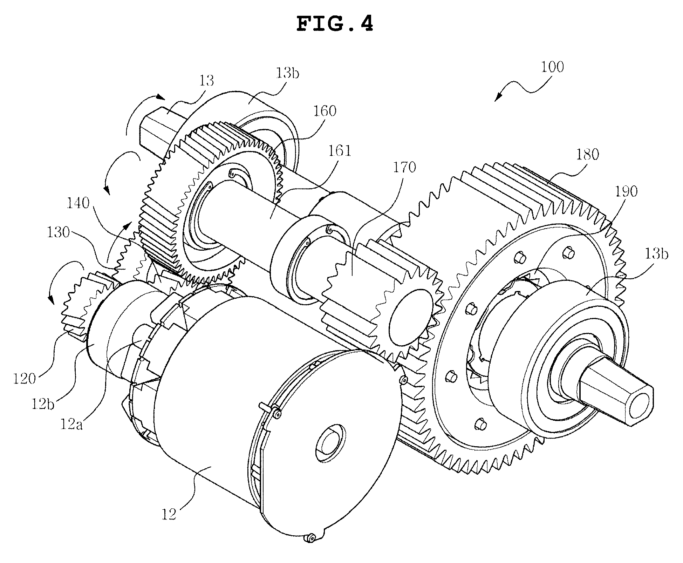

FIG. 4 is a rear perspective view illustrating the power transmission system of an electric bicycle according to an exemplary embodiment of the present disclosure.

Referring to FIGS. 3 and 4, the first following gear 120 receives power from the rotational shaft 12a of the driving motor 12. Here, the first following gear 120 is installed in the rotational shaft 12a to co-rotate with the rotational shaft 12a. Here, the first following gear 120 may be coupled to an end portion of the rotational shaft 12a.

Also, the first following gear 120 may be configured as a pinion, for example.

Meanwhile, a rotational shaft bearing 12b is installed in the rotational shaft 12a to support the rotational shaft 12a. Here, an outer circumferential surface of the rotational shaft bearing 12b may be fixed to the case 110 and an inner circumferential surface thereof may be installed in the rotational shaft 11 a, for example.

The first driving gear 130 may be engaged with the first following gear 120 to receive power.

Here, the first driving gear 130 is provided on one side of a first gear shaft 131 and rotate according to rotation of the following gear 120. Also, the first driving gear 130 may be configured as a wheel gear.

The second following gear 150 is installed in the first gear shaft 131 in which the first driving gear 130 is installed, so as to co-rotate with the first gear shaft 131. Here, the second following gear 150 may be provided on the other side of the first gear shaft 131 and co-rotate according to rotation of the first driving gear 130 to receive power.

The second following gear 150 may be configured as a pinion, for example.

The second driving gear 160 may be engaged with the second following gear 150 to receive power.

Here, the second driving gear 160 may be positioned on one side of the second gear shaft 161 and rotate according to rotation of the second following gear 150. Also, the second driving gear 160 may be configured as a wheel gear.

The third following gear 170 may be installed in the second gear shaft 161 in which the second driving gear 160 is installed, so as to co-rotate with the second gear shaft 161. Here, the third following gear 170 may be provided on the other wide of the second gear shaft 16 and co-rotate according to rotation of the second driving gear 160 to receive power.

Also, the third following gear 170 may be configured as a pinion, for example.

The third driving gear 180 is engaged with the third following gear 170 to receive power.

Here, the third driving gear 180 is installed in a pedal shaft 13 and rotates according to rotation of the third following gear 170. Also, the third driving gear 180 may be configured as a wheel gear.

A pedal shaft bearing 13b is installed in the pedal shaft 13 to support the pedal shaft 13. Here, an outer circumferential surface of the pedal shaft bearing 13b may be fixed to the case 110 and an inner circumferential surface thereof may be installed in the pedal shaft 13, for example.

The first following gear 120 and the first driving gear 130 may have a helical gear form so as to be engaged with each other. Also, the first following gear 120 may be formed to be smaller than the first driving gear 130. Here, the first following gear 120 may be formed to have a gear ratio of 1/2 or smaller of that of the first driving gear 130, but the gear ratio of the first following gear 120 to the first driving gear 130 in the power transmission system of the electric bicycle is not limited thereto.

The second following gear 150 and the second driving gear 160 may have a helical gear form so as to be engaged with each other, for example. Also, the second following gear 150 may be formed to be smaller than the second driving gear 160. Here, the second following gear 150 may be formed to have a gear ratio of 1/2 or smaller of that of the second driving gear 160, but the gear ratio of the second following gear 150 to the second driving gear 160 in the power transmission system of the electric bicycle is not limited thereto.

The third following gear 160 and the third driving gear 180 may have a spur gear form so as to be engaged with each other. Also, the third following gear 170 may be formed to be smaller than the third driving gear 180. Here, the third following gear 170 may be formed to have a gear ratio of 1/2 or smaller of that of the third driving gear 180, but the gear ratio of the third following gear 170 to the third driving gear 180 in the power transmission system of the electric bicycle according to an exemplary embodiment of the present disclosure is not limited thereto.

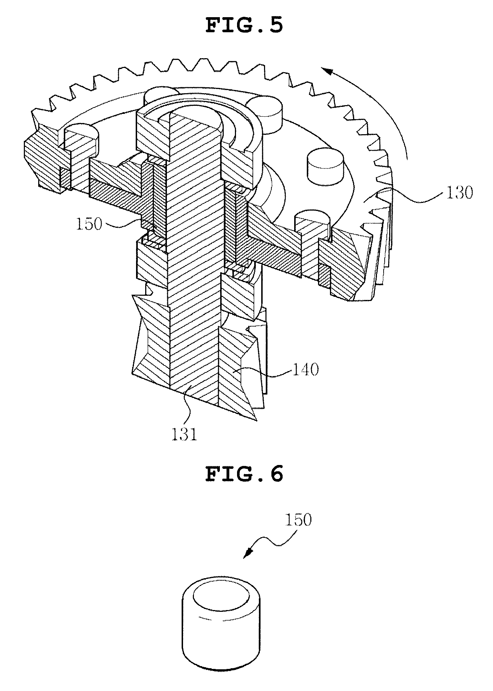

FIG. 5 is a cutaway perspective view illustrating a structure in which a unidirectional clutch is installed in the power transmission system of an electric bicycle according to an exemplary embodiment of the present disclosure and FIG. 6 is a perspective view illustrating the unidirectional clutch in the power transmission system of an electric bicycle according to an exemplary embodiment of the present disclosure.

Referring to FIGS. 5 and 6, the first power transmission unit is provided between the first driving gear 130 and the first gear shaft 131 to transmit power only in one direction.

Here, the first power transmission unit is configured as a uni-directional clutch 140 and transmits power from the first driving gear 130 only to the first gear shaft 131. Here, the one direction may be a direction opposite to a rotational direction of the rotational shaft 12a of the driving motor 12. The one direction may be a counterclockwise direction, for example, but one direction in the power transmission system 100 of an electric bicycle according to an exemplary embodiment of the present disclosure is not limited to the counterclockwise direction.

The uni-directional clutch 140 may be configured as a cylindrical clutch, for example.

Here, the technique of transmitting power in one direction through the uni-directional clutch 140 is a known technique, and thus, a detailed description thereof will be omitted.

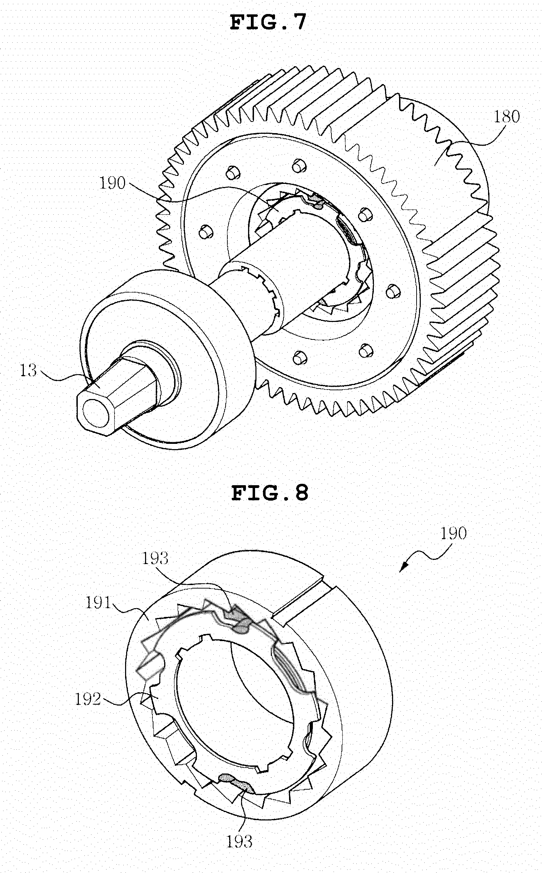

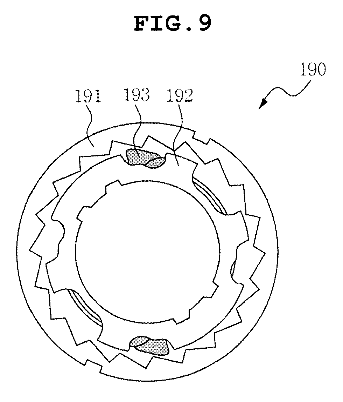

FIG. 7 is a perspective view illustrating a structure in which a ratchet is installed in the power transmission system of an electric bicycle according to an exemplary embodiment of the present disclosure, FIG. 8 is a perspective view illustrating the ratchet in power transmission system of an electric bicycle according to an exemplary embodiment of the present disclosure, and FIG. 9 is a cross-sectional view illustrating the ratchet in power transmission system of an electric bicycle according to an exemplary embodiment of the present disclosure.

Referring to FIGS. 7 through 9, the second power transmission unit is provided between the third driving gear 180 and the pedal shaft 13 and transmits power only in one direction.

Here, the second power transmission unit is configured as a ratchet 190 to transmit power from the third driving gear 180 only to the pedal shaft 13.

Here, the ratchet 190 may co-rotate with the third driving gear 180, and may transmit rotary power from the third driving gear 180 in one direction to the pedal shaft 13 and may not transmit rotary power of rotation from the pedal shaft 13 in the other direction, to the third driving gear 180. That is, when rotating in one direction, the ratchet 190 transmits power, and when rotating in the other direction, the ratchet 190 runs idle, and thus, power is not transmitted. Thus, the ratchet 190 rotates the chain 15 according to rotation of the pedal shaft 13 based on pedal effort generated as the user works the pedal 14, and transmits power in a direction in which the front wheel 16 and the rear wheel 17 rotate (refer to FIG. 1).

The ratchet 190 may include a support member 191 having protrusions formed on an inner circumferential surface thereof, a spring 192 positioned on the inner circumferential surface of the support member 191 and having protrusions formed on an outer circumferential surface thereof, and a pawl 193 provided in the spring 192.

As set forth above, according to the exemplary embodiments of the present disclosure, the power transmission system 100 of the electric bicycle has a 3-stage deceleration structure, thus having a reduced size and weight.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope and spirit of the disclosure.

Accordingly, any and all modifications, variations or equivalent arrangements should be considered to be within the scope of the disclosure, and the detailed scope of the disclosure will be disclosed by the accompanying claims.

## Claims

1. A power transmission system of an electric bicycle, the power transmission system comprising:
a first following gear receiving power from a rotational shaft of a driving motor;
a first driving gear engaged with the first following gear to receive power;
a second following gear installed in a first gear shaft in which the first driving gear is installed;
a second driving gear engaged with the second following gear to receive power;
a third following gear installed in a second gear shaft in which the second driving gear is installed; and
a third driving gear engaged with the third following gear to receive power, and installed in a pedal shaft.

2. The power transmission system of claim 1, further comprising: a first transmission unit provided between the first driving gear and the first gear shaft and transmitting power only in one direction,
wherein power is transmitted from the first driving gear only to the first gear shaft.

3. The power transmission system of claim 2, wherein the first power transmission unit is configured as a uni-directional clutch.

4. The power transmission system of claim 1, further comprising: a second power transmission unit provided between the third driving gear and the pedal shaft and transmitting power only in one direction,
wherein power is transmitted from the third driving gear only to the pedal shaft.

5. The power transmission system of claim 4, wherein the second power transmission unit is configured as a ratchet.

6. The power transmission system of claim 1, further comprising:
a first power transmission unit provided between the first driving gear and the first gear shaft and transmitting power only in one direction; and
a second power transmission unit provided between the third driving gear and the pedal shaft and transmitting power only in one direction,
wherein power is transmitted from the first driving gear only to the first gear shaft and power is transmitted from the third driving gear only to the pedal shaft.

7. The power transmission system of claim 6, wherein the first power transmission unit is configured as a uni-directional clutch, and the second power transmission unit is configured as a ratchet.

8. The power transmission system of claim 1, wherein the first driving gear, the second driving gear, and the third driving gear are configured as wheel gears.

9. The power transmission system of claim 1, wherein the first following gear, the second following gear, and the third following gear are configured as pinions.

10. The power transmission system of claim 1, wherein the first following gear is installed in the rotational shaft and co-rotates with the rotational shaft.

11. The power transmission system of claim 1, wherein the first driving gear is installed on one side of the first gear shaft, the second following gear is installed on the other side of the first gear shaft, and the first driving gear and the second following gear co-rotate with the first gear shaft.

12. The power transmission system of claim 1, wherein the second driving gear is installed on one side of the second gear shaft, the third following gear is installed on the other side of the second gear shaft, and the second driving gear and the third following gear co-rotate with the second gear shaft.

13. The power transmission system of claim 1, wherein the first following gear and the first driving gear are configured as helical gears.

14. The power transmission system of claim 1, wherein the second following gear and the second driving gear are configured as helical gears.

15. The power transmission system of claim 1, wherein the third following gear and the third driving gear are configured as spur gears.

16. The power transmission system of claim 1, wherein the first following gear, the second following gear, and the third following gear are formed to be smaller than the first driving gear, the second driving gear, and the third driving gear, respectively.

17. The power transmission system of claim 1, wherein the first following gear, the second following gear, and the third following gear are formed to have gear ratios of 1/2 or smaller of those of first driving gear, the second driving gear, and the third driving gear, respectively.
